# DEMANDE DE BREVET EUROPEEN

(11) **EP 4 748 643 A1**
(43) Date de publication de la demande: **27.05.2026**
(21) Numéro de dépôt: 25218458.5
(22) Date de dépôt: 25.11.2025
(51) Int. Cl.: B60N 2/894, B60N 2/815, B60N 2/829, B60N 2/879, B60N 2/885

(54) **APPUI-TÊTE DE SIÈGE DE VÉHICULE AUTOMOBILE**

(30) Priorité: 25.11.2024 FR 2412898
(71) Demandeur: Tesca Seat Components Services, 92977 Paris La Défense Cedex (FR)
(72) Inventeur: LEFEVRE, Steve, 92977 Paris La Défense Cedex (FR); GEORGES, Laurent, 92977 Paris La Défense Cedex (FR)
(74) Mandataire: Sayettat, Julien Christian

(57) **Abrégé**

Appui-tête (1) de siège de véhicule automobile comprenant une armature (2) comprenant deux tiges (3) symétriques l'une par rapport à l'autre, une structure (4) montée en coulissement sur lesdites tiges, chacune desdites tiges comprenant une partie inférieure (5) rectiligne reliée à une partie supérieure (6) rectiligne par une partie repliée de liaison (7), les parties inférieures (5) desdites tiges étant parallèles et écartées l'une de l'autre selon un premier écart (8) et les parties supérieures (6) desdites tiges étant parallèles et écartées l'une de l'autre selon un deuxième écart (9) de moindre amplitude que ledit premier écart, lesdites parties supérieures étant logées dans ladite structure, ladite structure étant montée en coulissement sur lesdites parties supérieures.

## Description

L'invention concerne un appui-tête de siège de véhicule automobile.

Il est connu de réaliser un appui-tête de siège de véhicule automobile comprenant :
- une armature destinée à être fixée en haut d'un dossier dudit siège, ladite armature comprenant deux tiges tubulaires métalliques s'étendant verticalement, lesdites tiges étant symétriques l'une par rapport à l'autre selon un plan de symétrie vertical longitudinal,
- une structure en matériau plastique moulé présentant une face avant recouverte par un coussin d'appui de la tête d'un occupant dudit siège, ladite structure étant montée en coulissement sur lesdites tiges de manière à pouvoir être réglée en hauteur.

Selon les réalisations connues, les tiges s'étendent parallèlement l'une par rapport à l'autre selon un écart sensiblement constant, notamment compris entre 120 et 150 mm.

Cependant, avec un tel écart entre les tiges, il est observé qu'un occupant du siège est mal protégé contre le « coup du lapin », sa tête étant susceptible de parcourir une course importante vers l'arrière au sein du coussin d'appui-tête et également dans la structure pouvant, en cas de choc violent, se déformer de façon importante.

Et il est connu que l'occupant du siège est d'autant mieux protégé contre le « coup du lapin » que la course de sa tête est limitée.

La déformation de la structure est notamment due à l'écart important entre les tiges dans leur partie supérieure, qui correspond à la zone d'impact de la tête de l'occupant, lesdites tiges ne pouvant contrer de façon efficace la déformation de ladite structure.

L'invention a pour but de pallier cet inconvénient.

A cet effet, l'invention propose un appui-tête de siège de véhicule automobile comprenant :
- une armature destinée à être fixée en haut d'un dossier dudit siège, ladite armature comprenant deux tiges tubulaires métalliques s'étendant verticalement, lesdites tiges étant symétriques l'une par rapport à l'autre selon un plan de symétrie vertical longitudinal,
- une structure en matériau plastique moulé présentant une face avant recouverte par un coussin d'appui de la tête d'un occupant dudit siège, ladite structure étant montée en coulissement sur lesdites tiges de manière à pouvoir être réglée en hauteur,
ledit appui-tête présentant en outre les caractéristiques suivantes :
- chacune desdites tiges comprend une partie inférieure rectiligne destinée à être fixée sur ledit dossier et une partie supérieure rectiligne, ladite partie inférieure étant reliée à ladite partie supérieure par une partie repliée de liaison, les parties inférieures desdites tiges étant parallèles et écartées l'une de l'autre selon un premier écart et les parties supérieures desdites tiges étant parallèles et écartées l'une de l'autre selon un deuxième écart de moindre amplitude que ledit premier écart,
- lesdites parties supérieures sont logées dans ladite structure,
- ladite structure est montée en coulissement sur lesdites parties supérieures.

Dans cette description, les termes de positionnement dans l'espace (longitudinal, transversal, vertical, latéral, supérieur, inférieur, ...) sont pris en référence au véhicule dans lequel est disposé l'appui-tête, ledit véhicule s'étendant longitudinalement selon sa longueur (axe X), transversalement selon sa largeur (axe Y) et verticalement selon sa hauteur (axe Z).

Avec l'agencement proposé, la réduction de l'écart entre les parties supérieures des tiges permet de limiter la déformation de la structure en cas d'impact de la tête d'un occupant du siège, et donc d'améliorer la sécurité dudit occupant.

On précise ici que les écarts sont mesurés entre les axes de symétrie selon lesquels s'étendent les parties supérieure et inférieure.

On notera en outre qu'une telle réduction de l'écart entre les tiges dans leur partie supérieure permet de libérer de l'espace à proximité latérale desdites tiges, ce qui permet, comme on le verra après, de loger des éléments latéraux, comme des modules de transmission sonore ou des éléments d'appui latéral de la tête d'un occupant du siège, et ceci sans requérir un épaississement de l'appui-tête, notamment selon les directions transversale et longitudinale.

D'autres particularités et avantages de l'invention apparaîtront dans la description qui suit, faite en référence aux figures jointes, dans lesquelles :
[Fig.1] est une vue schématique partielle en vue longitudinale d'un appui-tête selon une réalisation, ledit appui-tête étant pourvu d'éléments latéraux,
[Fig.2] est une vue schématique partielle en perspective de l'appui-tête de la figure 1,
[Fig.3] est une vue schématique partielle en perspective d'un appui-tête selon une autre réalisation.

En référence aux figures, on décrit un appui-tête 1 de siège de véhicule automobile comprenant :
- une armature 2 destinée à être fixée en haut d'un dossier dudit siège, ladite armature comprenant deux tiges 3 tubulaires métalliques s'étendant verticalement, lesdites tiges étant symétriques l'une par rapport à l'autre selon un plan de symétrie P vertical longitudinal,
- une structure 4 en matériau plastique moulé présentant une face avant 19 recouverte par un coussin, non représenté, d'appui de la tête d'un occupant dudit siège, ladite structure étant montée en coulissement sur lesdites tiges de manière à pouvoir être réglée en hauteur,
ledit appui-tête présentant en outre les caractéristiques suivantes :
- chacune desdites tiges comprend une partie inférieure 5 rectiligne destinée à être fixée sur ledit dossier et une partie supérieure 6 rectiligne, ladite partie inférieure 5 étant reliée à ladite partie supérieure 6 par une partie repliée 7 de liaison, les parties inférieures 5 desdites tiges étant parallèles et écartées l'une de l'autre selon un premier écart 8 et les parties supérieures 6 desdites tiges étant parallèles et écartées l'une de l'autre selon un deuxième écart 9 de moindre amplitude que ledit premier écart,
- lesdites parties supérieures sont logées dans ladite structure,
- ladite structure est montée en coulissement sur lesdites parties supérieures.

On rappelle que les écarts 8,9 sont mesurés entre les axes de symétrie 20,21 selon lesquels s'étendent les parties inférieure 5 et supérieure 6.

Selon une réalisation, le deuxième écart 9 est inférieur ou égal à 90 mm, étant notamment compris entre 70 et 90 mm, le choix d'un tel écart permettant d'optimiser la sécurité de l'occupant du siège.

Selon une réalisation, le premier écart 8 est compris entre 120 et 150 mm.

Selon les réalisations représentées, l'appui-tête 1 comprend en outre deux éléments latéraux 23 disposés latéralement de part et d'autre de la structure 4.

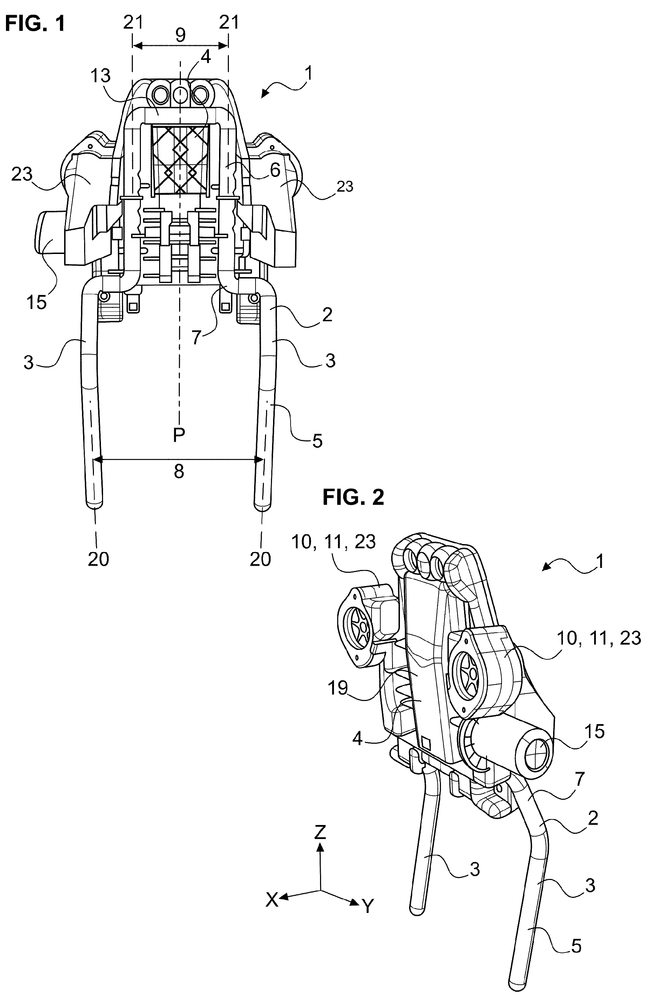

Selon la réalisation représentée en figures 1 et 2, les éléments latéraux 23 sont des modules 10 de transmission sonore, lesdits modules comprenant chacun un boitier 11 en matériau plastique moulé et un dispositif de transmission sonore - tel un haut-parleur ou tout autre dispositif de transmission - logé dans ledit boitier.

On profite ainsi de l'espace libéré à proximité latérale des parties supérieures 6 des tiges 3 pour y loger des éléments 23 sous forme de modules 10 de transmission sonore.

On peut prévoir, comme visualisé en figure 1, que l'armature 2 soit à base d'un tube métallique replié de sorte que les extrémités supérieures des tiges 3 soient reliées entre elle par une entretoise 13 horizontale issue dudit tube.

Selon une variante non représentée, les extrémités supérieures des tiges 3 peuvent être reliées entre elles par une entretoise rapportée, ladite entretoise étant à base de matériau plastique moulé et/ou de métal.

Selon une autre variante non représentée, les extrémités supérieures des tiges 3 ne sont pas reliées entre elles.

De façon non représentée, on peut prévoir que le coussin d'appui soit pourvu d'un canal de passage du son issu du dispositif de transmission sonore.

Selon diverses réalisations, les boitiers 11 des modules 10 de transmission sonore sont :
- soit des pièces indépendantes montées sur la structure 4,
- soit moulés d'une pièce avec ladite structure.

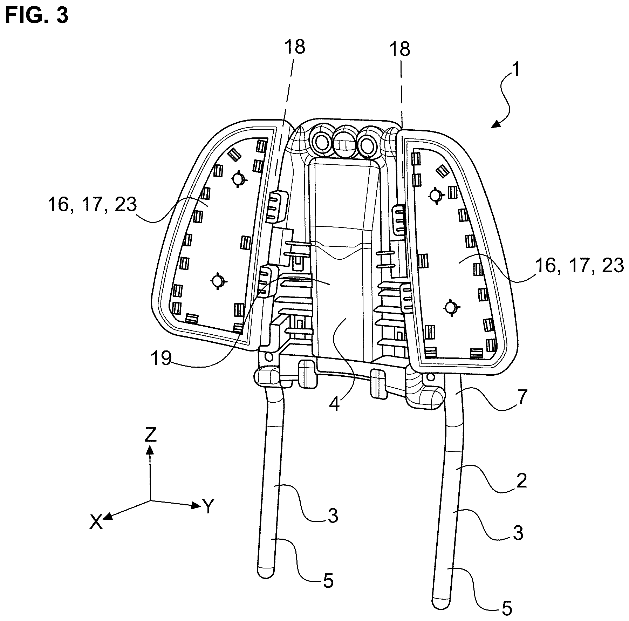

Selon la réalisation représentée en figure 3, les éléments latéraux 23 sont des éléments d'appui latéral 16 - comprenant ici chacun une structure latérale 17 en matériau plastique moulé recouverte par un coussin latéral, non représenté - de la tête d'un occupant du siège, lesdits éléments étant montés en rotation selon deux axes 18 sensiblement verticaux latéralement de part et d'autre de la structure 4, de manière à pouvoir être actionnés entre une position escamotée vers l'arrière et une position déployée vers l'avant permettant un appui latéral de ladite tête.

On profite ainsi de l'espace libéré à proximité latérale des parties supérieures 6 des tiges 3 pour y loger des éléments sous forme d'éléments d'appui latéral 16.

Selon une réalisation non représentée, on peut prévoir que des modules 10 de transmission sonore soient montés chacun sur un élément d'appui latéral 16 respectif.

Ainsi, l'espace libéré à proximité latérale des tiges 3 est mis à profit pour loger deux types d'éléments latéraux 23, à savoir des modules 10 et des éléments d'appui 16.

De façon partiellement représentée, l'appui-tête 1 comprend en outre :
- un dispositif de verrouillage de la structure 4 dans la position de réglage choisie, ledit dispositif étant rappelé en verrouillage par un moyen ressort,
- un moyen d'actionnement 15 dudit dispositif en déverrouillage, ici sous forme d'un bouton.

De façon non représentée, le premier dispositif de verrouillage peut comprendre :
- une pluralité de crans de verrouillage s'étageant verticalement sur au moins une des tiges 3 de manière à définir une tige crantée,
- au moins une saillie de verrouillage montée mobile par rapport à la structure 4 entre une position de verrouillage, où ladite saillie s'insère dans un desdits crans, et une position de déverrouillage, où ladite saillie se retire dudit cran afin de libérer le coulissement dudit corps.

En variante non représentée, l'appui-tête 1 comprend en outre un dispositif d'actionnement motorisé de la structure 4 pour l'amener dans la position de réglage choisie, ledit dispositif comprenant un motoréducteur fixé à ladite structure, ledit motoréducteur présentant une dimension transversale inférieure au deuxième écart 9 de manière à pouvoir coulisser entre les parties supérieures 6 des tiges 3.

Un tel dispositif peut comprendre notamment une tige filetée actionnée en rotation par le motoréducteur, ladite tige filetée passant dans un écrou fixé à une entretoise 13 reliant les tiges 3 entre elles.

## Revendications

1. Appui-tête (1) de siège de véhicule automobile comprenant :
• une armature (2) destinée à être fixée en haut d'un dossier dudit siège, ladite armature comprenant deux tiges (3) tubulaires métalliques s'étendant verticalement, lesdites tiges étant symétriques l'une par rapport à l'autre selon un plan de symétrie (P) vertical longitudinal,
• une structure (4) en matériau plastique moulé présentant une face avant (19) recouverte par un coussin d'appui de la tête d'un occupant dudit siège, ladite structure étant montée en coulissement sur lesdites tiges de manière à pouvoir être réglée en hauteur,
ledit appui-tête étant **caractérisé en ce que** :
• chacune desdites tiges comprend une partie inférieure (5) rectiligne destinée à être fixée sur ledit dossier et une partie supérieure (6) rectiligne, ladite partie inférieure (5) étant reliée à ladite partie supérieure (6) par une partie repliée de liaison (7), les parties inférieures (5) desdites tiges étant parallèles et écartées l'une de l'autre selon un premier écart (8) et les parties supérieures (6) desdites tiges étant parallèles et écartées l'une de l'autre selon un deuxième écart (9) de moindre amplitude que ledit premier écart,
• lesdites parties supérieures sont logées dans ladite structure,
• ladite structure est montée en coulissement sur lesdites parties supérieures.

2. Appui-tête (1) selon la revendication 1, **caractérisé en ce que** le deuxième écart (9) est inférieur ou égal à 90 mm.

3. Appui-tête (1) selon l'une des revendications précédentes, **caractérisé en ce qu'**il comprend en outre deux éléments latéraux (23) disposés latéralement de part et d'autre de la structure (4).

4. Appui-tête (1) selon la revendication 3, **caractérisé en ce que** les éléments latéraux (23) sont des modules (10) de transmission sonore, lesdits modules comprenant chacun un boitier (11) en matériau plastique moulé et un dispositif de transmission sonore logé dans ledit boitier.

5. Appui-tête (1) selon la revendication 4, **caractérisé en ce que** les boitiers (11) des modules (10) de transmission sonore sont :
• soit des pièces indépendantes montées sur la structure (4),
• soit moulés d'une pièce avec ladite structure.

6. Appui-tête (1) selon la revendication 3, caractérisé en ce les éléments latéraux (23) sont des éléments d'appui latéral (16) de la tête d'un occupant du siège, lesdits éléments étant montés en rotation selon deux axes (18) sensiblement verticaux latéralement de part et d'autre de la structure (4), de manière à pouvoir être actionnés entre une position escamotée vers l'arrière et une position déployée vers l'avant permettant un appui latéral de ladite tête.

7. Appui-tête (1) selon la revendication précédente, **caractérisé en ce que** des modules (10) de transmission sonore sont montés chacun sur un élément d'appui latéral (16) respectif.

8. Appui-tête (1) selon l'une quelconque des revendications 1 à 7, **caractérisé en ce qu'**il comprend en outre :
• un dispositif de verrouillage de la structure (4) dans la position de réglage choisie, ledit dispositif étant rappelé en verrouillage par un moyen ressort,
• un moyen d'actionnement (15) dudit dispositif en déverrouillage.

9. Appui-tête (1) selon l'une quelconque des revendications 1 à 7, **caractérisé en ce qu'**il comprend en outre un dispositif d'actionnement motorisé de la structure (4) pour l'amener dans la position de réglage choisie, ledit dispositif comprenant un motoréducteur fixé à ladite structure, ledit motoréducteur présentant une dimension transversale inférieure au deuxième écart (9) de manière à pouvoir coulisser entre les parties supérieures (6) des tiges (3).
